(19) **Europäisches Patentamt / European Patent Office / Office européen des brevets**

(11) **EP 4 650 897 A1**

(12) # EUROPEAN PATENT APPLICATION

(43) Date of publication:
**19.11.2025 Bulletin 2025/47**

(21) Application number: **24176233.5**

(22) Date of filing: **16.05.2024**

(51) International Patent Classification (IPC):
**G05B 23/02** (2006.01)  **F03D 17/00** (2016.01)

(52) Cooperative Patent Classification (CPC):
**G05B 23/024; F03D 17/0065; F03D 17/007; F03D 17/026;** F05B 2260/84

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Gamesa Renewable Energy A/S**
**7330 Brande (DK)**

(72) Inventor: **Frederiksen, Rasmus Dovnborg**
**9000 Aalborg (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **WIND TURBINE DOWNTIME PREDICTION BASED ON OPERATIONAL DATA**

(57)    A computer-implemented method of generating a model for predicting a downtime event of a wind turbine from operational data of the wind turbine is provided. A base model (70) is trained with first data sets of selected plural first wind turbines (101) using machine learning. Operational data of the respective data set serves as an input to the base model and a downtime event associated with the data set serves as a label for the training. Plural second wind turbines (102) are selected according to a predefined selection criterion that defines a minimum degree of similarity between the selected plural second wind turbines (102). Transfer learning (90) is applied to the base model (70) using second data sets of the selected second wind turbines (102) to obtain a sub-model for the selected second wind turbines (102).

FIG 4

EP 4 650 897 A1

## Description

FIELD OF THE INVENTION

The present invention relates to computer-implemented method of generating a model for predicting a downtime event of a wind turbine from operational data of the wind turbine. It further relates to a respective method of collecting training data for generating such model and to the application of such model for predicting a downtime event of a wind turbine. A respective data processing system and a respective computer program are further provided.

BACKGROUND

When operating wind turbines, energy production may be lost due to unplanned downtime events of the wind turbines. A downtime event may for example result from a failure of a wind turbine component and/or the environmental conditions, such as weather conditions with may lead, e.g., to an icing of the rotor blades. Knowing the likelihood of the occurrence of such downtime event may allow an operator to take counter measures in due time, such as the preemptive replacement of the component, the adaptation of the wind turbine's operating characteristics, or the like. In general, by knowing the risk of occurrence of a respective downtime event, the duration of the downtime can be reduced, thus reducing the loss of energy production.

Conventional models may suffer from the required prediction accuracy, in particular for events the prediction of which involves data from several sources. The attempt has been made to employ artificial neural networks (ANNs) for predictive maintenance. However, the resulting models are generally applicable only for the wind turbine for which they have been generated. Further, the generation of such model requires a large amount of training data from the respective wind turbine, which is often not available. Such individualized models may therefore not be applicable in practice. Current wind turbine operation may therefore employ conventional condition monitoring systems and fault diagnosis. Such fault diagnosis may however only provide information on a fault that has already occurred or may require a fault signal having obvious fault characteristics.

It is thus desirable to improve the prediction of the occurrence of a downtime event for different types of wind turbines. It is in particular desirable to provide a practical approach that can be implemented in practice on plural different wind turbines.

SUMMARY

Accordingly, there is a need to mitigate at least some of the drawbacks mentioned above and to provide an improved way of predicting a downtime event for a wind turbine.

This need is met by the features of the independent claims. The dependent claims describe embodiments of the invention.

According to an embodiment of the invention, a computer-implemented method of generating a model for predicting a downtime event of a wind turbine from operational data of the wind turbine is provide. The method comprises selecting plural first wind turbines for each of which one or more, preferably plural, first data sets comprising operational data of the wind turbine associated with a downtime event of the wind turbine are available, and training a base model with the first data sets of the selected plural first wind turbines using machine learning. For training with each first data set, the operational data of the respective data set serves as an input to the base model and the associated downtime event of the data set serves as a label. The method further comprises selecting plural second wind turbines according to a predefined selection criterion. The selection criterion defines a minimum degree of similarity between the selected plural second wind turbines. For each of the selected second wind turbines, at least one second data set comprising operational data of the wind turbine associated with a downtime event of the wind turbine is available. A number of the selected second wind turbines may be smaller than a number of the selected first wind turbines and/or an average number of second data sets available for each second wind turbine may be smaller than an average number of first data sets available for each first wind turbine. Transfer learning is applied to the base model using the second data sets of the selected second wind turbines to obtain a sub-model for the selected second wind turbines. The sub-model is provided for predicting a downtime event of a wind turbine based on current operational data of the wind turbine.

By such method, an accurate prediction of a downtime event may be achieved for wind turbines even if there is only insufficient data available for such wind turbines. For example, only a small number of wind turbines of a particular type may be installed, or a new wind turbine model may become available, wherein in either case insufficient data may be available for proper modelling and in particular for machine learning. By making use of the method, a model may nevertheless be obtained (i.e. the sub-model) that provides an accurate prediction of downtime events for the wind turbine, and that may in particular benefit from the larger amount of data with which the base model has been trained. Further, the sub-model generated by the method is not only applicable to one specific wind turbine, but may be applicable to plural wind turbines. For example, it may be provided for predicting a downtime event of one or more of the second wind turbines and/or for one or more wind turbines that are similar to the second wind turbines, e.g. for wind turbines that fulfill a similarity criterion, for example to wind turbines that fulfill the selection criterion (based on which the second wind turbines have been selected). If the second wind turbines are for example of a particular wind turbine model, the generated sub-model may be applied for a new wind turbine of such model type even if no operational data has been collected so far for this specific wind turbine.

The sub-model generated by the method may also be more efficient for the prediction of downtime events compared to a model trained exclusively and independently on data available for the second wind turbines. These second wind turbines may be termed 'sub-optimal' wind turbines herein, as there may not be available sufficient representative operational data for these second wind turbines. As the base model employs plural data sets from plural first wind turbines, and thus a larger and more diverse amount of training data, it may be applicable to a relatively wide selection of first wind turbines. The sub-model may thereby become more efficient and more applicable compared to conventional models. In particular, as the sub-model may be applicable to all wind turbines of the second type, e.g. for which the selection criterion is fulfilled, the model may be viable for practical implementation on plural such wind turbines. The generated sub-model may thus allow a reduction of the downtime of the respective wind turbines and thereby an increase of the energy production of these wind turbines. The generated sub-model may further facilitate implementation thereof for the different plural wind turbines and may allow an operator of the respective wind turbine to take preemptive measures prior to an expected occurrence of a downtime event.

The label may be derived from the downtime event. The label may be a desired output of the respective model that is used for training. For example, if the model is configured to provide a probability for an occurrence of one or more downtime events, than the label may indicate a probability of 100% for the occurrence of the downtime event associated with the data set, e.g. for the respective point in time.

The sub-model may be trained with a smaller amount of training data as the base model. For example, the total number of second data sets may be (significantly) smaller than the total number of first data sets.

For each of the first wind turbines, a number of first data set above a threshold number may be available (i.e. a minimum number of first data sets). At least 2, 3, 4, 5 or more data sets may be available for at least some, preferably each first wind turbine.

At least some, preferably all of the second wind turbines may be different from first wind turbines. The generated sub-model may thus be applicable to different wind turbines even though only insufficient training data may be available for these. For example, there may be a dissimilarity in at least one wind turbine feature between the first wind turbines and the second wind turbines, and the second wind turbines may be selected based on a respective dissimilarity measure for this feature (which may be employed as the similarity measure and thus as the selection criterion for the second wind turbines). The generated sub-model may thus be employed for wind turbines that are dissimilar (in at least one wind turbine feature) from the wind turbines for which the base model has been generated.

In an embodiment, the selection of the plural second wind turbines according to the predefined selection criterion comprises selecting one or more wind turbine features for evaluation of similarity; and selecting plural wind turbines for which the one or more selected wind turbine features fulfill a similarity criterion as the plural second wind turbines. The selection may occur from a plurality of wind turbines for which one or more respective second data sets are available. The second wind turbines may form a second group or cluster of wind turbines.

In a similar manner, the first wind turbines may be selected according to a predefined selection criterion, which may define a minimum degree of similarity between the first wind turbines. One or more wind turbine features may be selected for evaluation of similarity between the first wind turbines, which may be the same as the one or more wind turbine features used to evaluate similarity between the second wind turbines, or may be different.

The respective similarity criterion may for example be met if the selected wind turbine features are of the same type, or one the same, or are within a predetermined range, or are above or below a threshold for the respective wind turbine feature. The similarity criterion for the first wind turbines and the second wind turbines is preferably different.

Such wind turbine feature, which may be used to select a group/cluster of second wind turbines that are similar within the group and/or that are dissimilar from the group of first wind turbines, may for example be a physical feature, such as a structural or electrical feature, a control feature, an environmental feature of the environment in which the wind turbine is placed (e.g. site-specific feature), and/or the like. The wind turbine feature may be correlated with the downtime event to be predicted, it may in particular have an influence on an operating parameter of the wind turbine that is associated with the downtime event.

In an example, the method may comprise deriving at least one quantitative measure of dissimilarity between the first wind turbines and a group of wind turbines from which the second wind turbines are to be selected, the dissimilarity measure being selected as the wind turbine feature for evaluation of similarity; and using the derived dissimilarity measure as the similarity criterion for selecting the plural second wind turbines. The same wind turbine feature which may be employed for selecting the second wind turbines according to their similarity may thus distinguish the second wind turbines from the first wind turbines. Wind turbines having a similar dissimilarity measure towards the first wind turbines may for example be selected as the second wind turbines.

The selection of the plural second wind turbines according to the selection criterion, e.g. the dissimilarity measure, may be performed by using clustering, for example k-means clustering. The clustering may employ one or more of the respective wind turbine features. Such clustering may allow distinguishing one or more groups/clusters of similar wind turbines from the first wind turbines. For each identified cluster, a respective transfer learning may be applied, and a respective sub-model may be generated.

The second wind turbines may be selected so that the measure of dissimilarity between the second wind turbines and the first wind turbines is above a threshold (e.g., the dissimilarity may be relatively high).

In an embodiment, the selecting of the one or more wind turbine features may comprise applying a feature learning algorithm that determines a correlation of wind turbine features with the downtime event and that selects one or more wind turbine features having a higher correlation than other wind turbine features. This may facilitate the identification of wind turbine features that are useful for selecting (in particular clustering) the first wind turbines to form a first group/cluster and the second wind turbines to form a second group/cluster. In particular, as wind turbine features are selected that correlate with the downtime event, it may be expected that with respect to the downtime event, the respective group/-cluster appears rather homogeneous so that the resulting model may be expected to deliver accurate prediction result for wind turbines of the respective group/cluster and for wind turbines that are similar to the wind turbines within the group/cluster with regard to the one or more selected wind turbine features.

Note that it may depend on the type of downtime event to be trained which features are suitable for grouping the wind turbines (clustering) - e.g. if icing is trained, blade length may be a significant feature; if bearing failure is to be trained, rotor weight, bearing type and turbine power may be respective features.

Accordingly, wind turbine features may in particular be selected for which the same model can be used to describe the relationship between the operational data and the downtime event. In other words, if the selected wind turbine features of the wind turbines in the group/-cluster are similar, then the wind turbines of the group/-cluster can be modeled by the same model.

For example, the one or more wind turbine features may comprise one or a combination of: a power rating of the wind turbine; a blade length of the wind turbine; a height of the wind turbine; a type of site at which the wind turbine is erected, in particular whether it is an onshore or an offshore site; a type of mechanical drive train of the wind turbine (gearbox, direct drive, etc.); a type of electrical generator of the wind turbine; a type of tower of the wind turbine; and a type of operational data produced by the wind turbine (similarity of data sets). These are however only examples of wind turbine features that may be used to group/cluster the wind turbines; other features may be used additionally or alternatively, depending on the type of event to be predicted by the model, i.e. to be trained.

A similarity criterion for selecting the first and/or second wind turbines may for example be a blade length within a defined length range, a electrical generator being of a particular type, a power rating being within a particular range, and/or the like. As mentioned above, the similarity criterion for the first wind turbines and the second wind turbines may be different, it may for example use different length ranges for wind turbine blade length, and/or define a different type of electrical generator (e.g., DFIG vs. PMSG), and the like.

The group of first wind turbines and the group of second wind turbines may thus each comprise wind turbines having sufficiently similar operating data sets and/or wind turbines that have a sufficiently similar structural and/or electrical configuration. This may allow accurate predictions for whole groups of wind turbines, e.g. new wind turbine models, for which insufficient operating data is available for model training.

In an embodiment, each of the base model and the sub-model is an artificial neural network. Each model may in particular be a deep learning model. Preferably a long short-term memory, LSTM, deep neural network is used, which is preferably a bidirectional LSTM. Such model may allow an efficient training using time sequence data. In particular, a time sequence of operational data before a respective downtime event, and optionally also thereafter, may be employed for training of such model.

The training of the base model may be a supervised training using the downtime event of the respective data set as a label.

Applying the transfer learning may comprise freezing a subset of parameters (e.g., weights and/or biases) of the baseline model and training the model with the frozen parameters using the second data sets to obtain the sub-model. For example, remaining parameters of the base model may be allowed to adjust while the parameters of one or more layers are frozen. At least parameters of a first layer may for example be frozen and parameters of an output layer may be allowed to adjust.

In other implementations, applying the transfer learning may additionally or alternatively comprise modifying a structure of the base model. For example, one or more layers of the base model may be removed and/or one or more layers may be added to the base model. As an example, one or more last layers of the base model (which are often task-specific) may be removed, and one or more new layers may be introduced on top of the base model, which may facilitate adaptation of the model to the group of second wind turbines.

The operational data may comprise data generated by the wind turbine and data of the wind turbine environment, e.g. meteorological data.

The operational data may comprise one or more time series of operational data. The base model and/or the sub-model may be configured to receive a multivariate time series as input. Plural input parameters that may influence the prediction of the downtime event may thus be considered.

The operational data of the first data sets and/or the second data sets may comprise operational data collected before (in particular directly before) the occurrence of the associated downtime event and/or operational data collected after (in particular directly after) the occurrence of the associated downtime event. This includes that the operational data may comprise operational data collected during the downtime event. Using this kind of data may allow a more accurate prediction.

The operational data of the first data sets and/or the second data sets may comprise wind turbine operating data collected from a supervisory control and data acquisition (SCADA) system and/or from a condition monitoring system (CMS) of the respective wind turbine during operation of the wind turbine, and/or may comprise meteorological data collected for the respective wind turbine during operation of the wind turbine. Each of the first and second data sets may comprise respective SCADA and/or CMS data. Such data may be readily available from plural installed wind turbines and may thus facilitate training of the model. Further, it may simplify implementation of the method on existing wind turbines.

Preferably, the wind turbine operating data comprises one or a combination of: a rotational speed of a wind turbine rotor; a power output of the wind turbine; temperature data of one or more wind turbine components obtained from a temperature sensor; and vibration data of one or more wind turbine components obtained from a vibration sensor. Wind turbine operating data may in particular refer to operating parameters of the wind turbine. Meteorological data may for example be ERA5 weather data; other types of weather data may likewise be employed.

The meteorological data may comprise one or a combination of: precipitation; wind speed and/or wind gusts; environmental temperature; and environmental humidity.

The operational data employed for training of the model and/or for inference may by selected according to the downtime event to be predicted; operational data that has an influence on the downtime event and that in particular correlates therewith may for example be selected.

The downtime event of the first data sets and/or the second data sets may comprise a downtime event recorded by the respective wind turbine, in particular a downtime event recorded in an alarm log of the wind turbine. Data collection for training the model may thus be facilitated, as the operational data and the associated downtime event may be collected from the logs and monitoring data of the wind turbines.

The second data sets may relate to the same downtime event as the first data sets.

A downtime event may be, e.g., a wind turbine component failure or malfunction, a wind turbine component reaching its end of life, a structural, electrical, or environmental event that precludes continuing operation of the wind turbine, or an excessive loading of a wind turbine component. A downtime event may for example be an icing of one or more rotor blades, a bearing failure (e.g. of a main bearing or generator bearing), excessive mechanical vibration or deflection of a component (e.g. rotor blade deflection or tower deflection), excessive fatigue loading of a component, excessive temperature of a component (e.g. gearbox, generator, power electronics or the like), an exceeding of an electrical limit, an exceeding of a rotation speed limit, and similar events that may result in downtime of the wind turbine, e.g. by requiring immediate shutdown of the wind turbine, a curtailed operation of the wind turbine, component replacement, or other service operation that may result in a downtime of the wind turbine.

The sub-model may be configured to provide a probability of the occurrence of a downtime event within a predefine period of time and/or an estimate of a time period until an expected occurrence of a downtime event (e.g. with a probability above a certain threshold) and/or a risk score for the occurrence of a downtime event. For example when training with training data for a particular event, the probability of occurrence of the event at the point in time at which the event actually occurred may be set to (or close to) 100%, and the training may occur by using this as an output of the model and using the time series of operational parameters before and optionally after the event as input data to the model.

For example, the model may be configured to provide as an output multi-label data. The multi-label data may correspond to a probability distribution over time, each label of the multi-label format corresponding to a point in time. During training, the label corresponding to the point in time at which the event occurred may be set to a probability of 100% (e.g. to binary 1). Efficient training of a model that predicts the probability of the event occurring at a particular point in time may thus be achieved.

The base model and/or the sub-model may thus be configured to provide a multivariate time series multilabel classification.

The model may also be trained for plural different types of downtime events. Operational data relevant for the respective events may then be used in the training. The model may then predict the probability of occurrence of different events from the respective operational data.

As an example, rotor blade icing may be an event to be predicted. Rotor blade length may be a wind turbine feature used for selecting the first wind turbines (e.g. shorter blade length range) and the second wind turbines (e.g., larger blade length range, e.g. of a new model for which not sufficient operational data is available). Operational data may for example include rotor speed and output power as wind turbine operating data and humidity, temperature and precipitation as meteorological operational data. The base model may then be trained by using abundant operational data for the group of first wind turbines and the sub-model may be generated from the base model using the small amount of operational data available for the group of second wind turbines. A model (i.e. the sub-model) may thus be obtained that allows a reliable prediction of blade icing for the second wind turbines or for similar wind turbines, e.g. for wind turbines having blades falling within the respective blade length range. It should be clear that this is only a non-limiting example, and that other and/or plural wind turbine features may be used for clustering the wind turbines, that other operational data may be employed, and that the model may be generated for different and/or plural downtime events.

According to another aspect of the invention, a method of collecting training data for generating a model in accordance with any of the methods disclosed herein is provided. The training data comprises one or more data sets for a wind turbine, each data set comprising operational data associated with a downtime event. The method comprises: defining parameters of the operational data of the data set, wherein the defined parameters comprise one or more operating parameters of the wind turbine and/or one or more meteorological parameters; defining one or more downtime events for the data sets; collecting plural data sets from plural wind turbines, each wind turbine having experienced one or more of the defined downtime events, wherein each data set comprises the operational data of the wind turbine collected for the defined parameters for the associated downtime event of the wind turbine; processing the collected data sets to bring the collected data sets into a predefined format; and providing the collected data sets for generation of the model by training the model with the collected data sets. Such method may be a computer implemented method that may be performed automatically. The collection of training data may thereby be facilitated, and it may become possible to obtain a large amount of training data with little effort. An accurate model may thus be generated that allows an accurate prediction of a downtime event of a wind turbine.

The training data may be collected for training a base model by collecting first data sets from first wind turbines (e.g. from wind turbines which have experienced a larger number of downtime events). Additionally or alternatively, the training data may be collected for a sub-model for applying transfer learning by using the collected training data, e.g. by collecting the second data sets from the second wind turbines. These may be wind turbines for which fewer downtime events and thus fewer data sets are available (for example new models of wind turbines or wind turbines erected at a new site).

Preferably, the downtime event for which a data set is collected may be identified from an alarm log of the wind turbine. One data set may be collected for each defined downtime event logged in the alarm log.

The predefined format may for example define a particular set of operating parameters and/or a particular sampling rate of the operational data and/or a particular value resolution and/or scaling of the operational data (e.g., normalization parameters).

Operational data may for example be interpolated to ensure the same time resolution (step size). Training by means of the collected data sets may thus be facilitated.

According to another aspect of the invention, a method of predicting a downtime event of a wind turbine is provided. The method comprises: obtaining a sub-model generated according to any of the methods described herein for the wind turbine; obtaining current operational data of the wind turbine; and applying the sub-model to the obtained current operational data to obtain a prediction of a downtime event of the wind turbine. The wind turbine may be a second wind turbine or be similar to second wind turbines for which the sub-model has been generated. Such method may allow an operator to identify such event prior to its occurrence and to take preemptive measures. In particular, the operation of the wind turbine may be adjusted to prevent the event from occurring, preemptive maintenance may be performed, or the like. The downtime of the wind turbine may thus be reduced and energy production may be increased. The sub-model may have any of the above-outlined configurations.

In an embodiment, the current operational data comprises forecast meteorological data. Thus, the prediction may be made more precise, as the model only needs to predict the wind turbine operation for the future. On short time scales (e.g. less than one day), such forecast meteorological data is rather precise.

According to a further aspect of the invention, a data processing system comprising a processing unit configured to perform any of the methods disclosed herein is provided. The processing system may comprise a memory which stores control instructions which, when executed by the processing unit, may cause the processing unit to perform any of the disclosed methods. The processing system may for example be implemented as a training system that generates the model. It may also be implemented as part of a wind turbine control system, wind farm control system, or remote monitoring system for predicting a downtime event for a particular wind turbine by performing inference using the sub-model.

According to a further aspect, a computer program is provided. The computer program comprises control instructions which, when executed by a processing unit of a data processing system, cause the processing unit to perform any of the methods described herein. Such computer program, in particular the instructions, may be provided on a volatile or non-volatile data carrier or storage device.

Additionally and/or alternatively a further aspect is disclosed, and/or in particular as an embodiment of one of a precedingly described aspect(s) and/or embodiment(s), namely, a method for operating a wind turbine, in particular an offshore wind turbine, further in particular a floating offshore wind turbine, and/or for feeding electrical and/or chemical energy to an electricity and/or chemical grid, the method comprising the following steps:

executing steps of an embodiment or of a combination of embodiments of a method as disclosed supra;

generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen;

transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and

supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1 is a schematic block diagram illustrating a collection of training data according to an embodiment.

Fig. 2 is a schematic block diagram illustrating a training of a model, in particular a base model, according to an embodiment.

Fig. 3 is a schematic drawing illustrating the providing of a multivariate multi-label sequence classification by a model according to an embodiment.

Fig. 4 is a schematic drawing illustrating the grouping of wind turbines into different clusters according to an embodiment.

Fig. 5 is a schematic block diagram illustrating a training of a model, in particular a sub-model, according to an embodiment.

Fig. 6 is a flow diagram illustrating an method of applying a generated model during operation of a wind turbine according to an embodiment.

Fig. 7 is a schematic drawing illustrating a processing system according to an embodiment.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

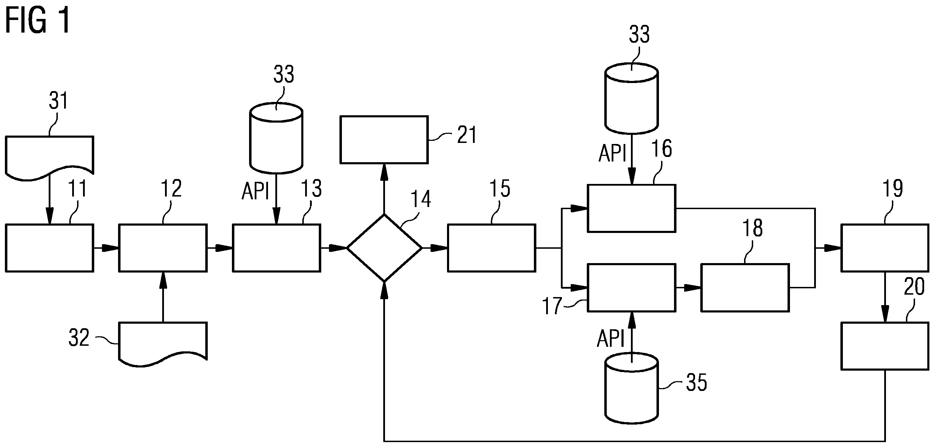

Fig. 1 is a flow diagram showing process steps of a method of collecting training data according to an embodiment. The method starts with an initialization step 11. The initialization employs a configuration data object 31 which may for example define paths to the data to be obtained, training parameters and data parameters for the training data. In step 12, a training data configuration is created. A configuration data object 32 may be used for this purpose. Such configuration data object may for example comprise one or more downtime events that are to be trained, for example in form of a list of wind turbine generated alarms that correspond to such events, a definition of the operational data to be used, which may comprise a list of wind turbine operating parameters (TDIs) and a list of meteorological parameters, and the like. For example, one or more downtime events may be selected and operational data, in particular the respective parameters and/or variables, may be defined in accordance with the selected downtime event, preferably such that the defined operational data (at least some, preferably the largest part of it) has a correlation with or other influence on the downtime event. For example, rotation speed, temperature and humidity may influence a downtime event in the form of blade icing and may thus be selected, or rotation speed, rotor torque, and temperature may influence a downtime event related to the wind turbine main bearings and may thus be selected. A respective feature selectin algorithm may be employed. As the training may occur for plural different downtime events, a plurality of different types of operational data may be defined in the configuration data object 32.

In step 13, the event data may be collected from a data source 33. For example, logged alarms may be collected from respective (full) alarm logs of the wind turbines. Collection may occur via data communication from the individual wind turbines and/or from a database that stores the alarm logs.

The event data may be collected for wind turbines of a first group (first wind turbines), for which sufficient event data and associated operational data is available, and which is a sufficiently homogeneous group. The selection of the first wind turbines may occur based on one or more wind turbine features that have an influence on the one or more downtime events to be trained. For example, for blade icing, blade length and/or wind turbine height may be wind turbine features to consider, since a blade icing model may not be sufficiently accurate if trained for small and large wind turbines that experience significantly different conditions at their blades during operation. As another example, when considering bearing fault as downtime event, generator type may be used as a wind turbine feature for the selection, since bearing loading may significantly differ for a direct drive generator and a gearbox coupled generator. The selection criterion for selecting the wind turbines of the first group may be that the respective wind turbine feature fulfils a similarity measure, for example that the wind turbine height or blade length lies within a specific range, that the wind turbine, the generator, the power conversion system, etc. is of a particular type, that the installation site is of a particular type (e.g. onshore or offshore), and/or the like.

The selection of the one or more wind turbine features and/or the grouping (or clustering) may occur automatically. For example, a k-means algorithm may be employed for clustering the wind turbines. The first wind turbines of the first group may then belong to the same cluster. Such clustering may also show which wind turbine features are suitable for distinguishing between the different wind turbines and are thus suitable as a basis for the selection.

In step 14, it is checked if there are enough data sets available. If not, a downtime event, e.g. an alarm event, is selected and sampled in step 15. This may comprise collecting wind turbine operating data from a data source 33 in step 16, which may be a database of individual wind turbines, a wind farm data base, a remote operating center database, and/or the like. The data may be collected from a SCADA system of the wind turbine. The data may be collected before and after the respective event, e.g. the logged alarm. It may further comprise collecting meteorological data in step 17 from a data source 35, e.g. from a climatological data provider via an API. The meteorological data may be collected for the same time period as the wind turbine operating data, i.e. the same time before and after the event. This may allow representing the conditions under which the wind turbine is operated when the downtime event occurred and may be relevant for weather based downtime events (e.g. icing). The collected data may for example be ERA5 weather data.

The collected data may be processed, for example by interpolating the meteorological data in step 18 to increase the resolution so as to match the data sample rate of the different types of collected operational data. A time resolution of 1 h of meteorological data may for example be increased to a 10 min resolution of the SCADA data. In step 19, the collected data may be merged. Step 19 may further include padding the data and/or removing NaN (not a number) values, and other processing.

In step 20, the data set (also termed data sample) and the associated meta data, in particular the associated alarm event, is stored. It is then checked again in step 14 if sufficient data sets are available. The decision step 14 may correspond to a minimum number of data sets required for training a model to achieve a certain level of confidence or accuracy for the model output. If there are sufficient data sets available, the data collection is finished in step 21. The collected data sets may be stored in a storage 62 for being used in model generation, in particular for training a model.

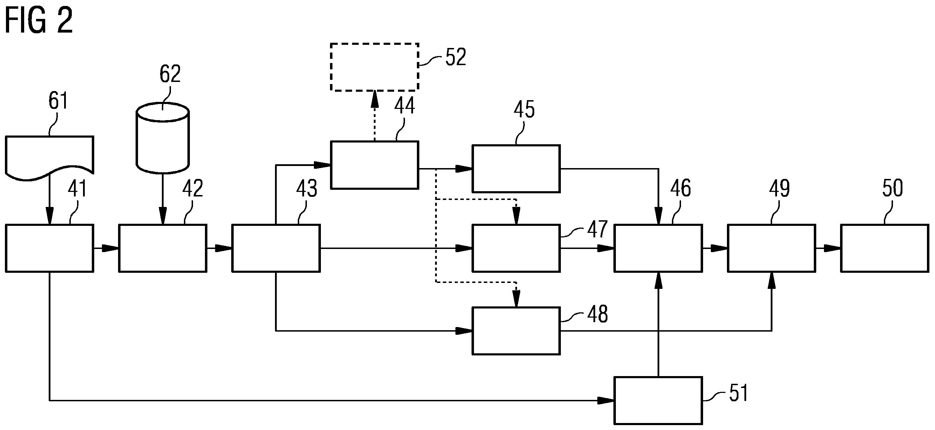

Figure 2 schematically illustrates the generation of a model, in particular a base model, for the first group of first wind turbines. The model may be generated by training using data which may be collected in accordance with the method of figure 1.

The model may be obtained in step 41 from a configuration data object 61, which may store the model architecture, model hyper-parameters, and any other data associated with the model. It may further store path(s) to the data sets with which the model is to be trained, e.g. to the data set storage 62, which may be a database. In step 42, the data sets are loaded from the sample storage 62. In step 43, the data sets are split into training data to be used for training, validation data for validating the model, and test data for testing the model.

In step 44, normalization parameters are derived for the training data sets. Normalization may bring the parameters of the training data sets to a comparable scale, e.g. between 0 and 1; it may involve scaling, clipping, shifting and the like. The normalization parameters may optionally be stored in step 52. The training data is normalized in step 45 using the normalization parameters. The model may be initialized in step 51 and provided to the training step 46. In step 46, the model is trained using the (normalized) data sets of the training data. Training may occur by a supervised learning method using the operational data of the data set as input and the downtime event, e.g. the alert collected from the alert log, as label. The model may be an ANN and the parameters (e.g., weights and/or biases) of the model may be determined during training, e.g. using backpropagation.

The validation data may be normalized in step 47, for which the same normalization parameters may be employed. The normalized validation data may be used during training in step 46 to evaluate the model and to tune the model's hyperparameters, such as the topology and size of the neural network. It may further be used for avoiding over-fitting of the model.

The test data is likewise normalized in step 48 and may be employed in step 49 to test the model and to derive one or more performance measures. For example, the operational data of the data sets in the test data may be used to predict downtime events by the trained model, and the predicted downtime events may be compared to the downtime events associated with the respective test data sets. It may thus be determined if the model performs well or needs to be adjusted, e.g. by adjusting its architecture, by retraining the model, and/or by collecting new or further training data to improve the training. In step 50, the model and optionally the model performance measures are stored. A model may thus be obtained for the first group of first wind turbines, which may be designated as a base model.

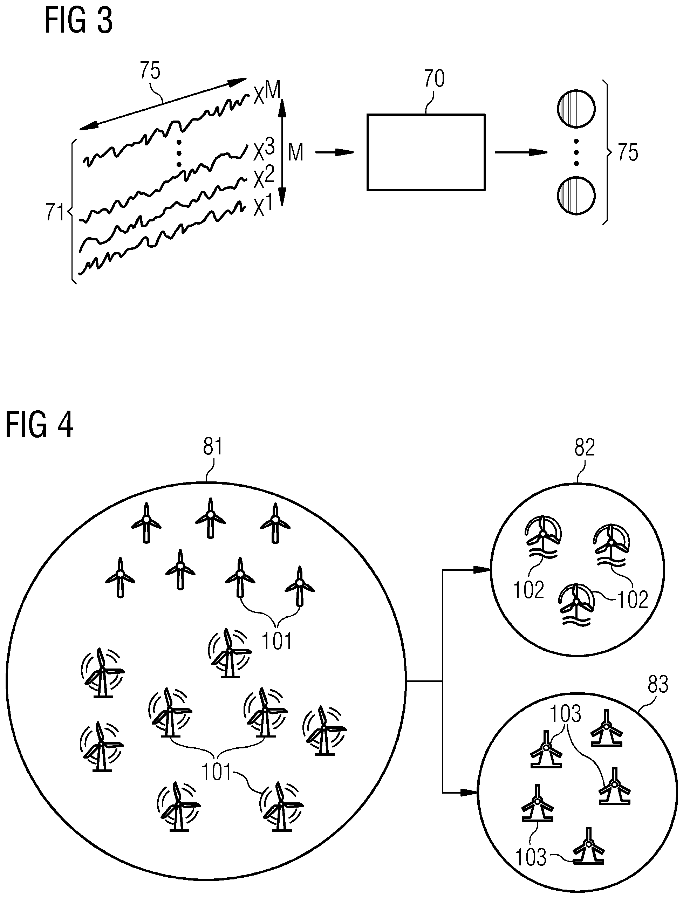

Preferably, the data sets comprise time series data for plural operating parameters and/or meteorological parameters, as exemplarily shown in figure 3 for the time series for parameters $X^1$ to $X^M$. The model input may thus be a multivariate time series 71 having a length 72 and a dimension M. The model 70 may provide as an output a probability distribution 75 over K classes.

For example, the label data, i.e. the model output used during training, which corresponds to the downtime event(s), may be of a form

$$y_t \in \{0, \ 1\} \text{ for } t \in \boldsymbol{T} = \{1, \ 2, \ 3, \ ..., T\}$$

wherein t is the time index, wherein 0 means no event and 1 means that the event is present. A binary multi-label format may for example be employed for training having the form:

$$Y = \begin{bmatrix} y_1 \\ y_2 \\ \vdots \\ y_T \end{bmatrix} \rightarrow \begin{bmatrix} 1 \\ 0 \\ \vdots \\ 1 \end{bmatrix}$$

During inference, the model may provide a probability distribution $P(y_T=1) \in [0, 1]$ as the probability distribution over T for that a respective event will occur at time t:

$$P(y_T = 1) = \begin{bmatrix} y_1 \\ y_2 \\ \vdots \\ y_T \end{bmatrix} \rightarrow \begin{bmatrix} 0.20 \\ 0.82 \\ \vdots \\ 0.12 \end{bmatrix}$$

As can be seen, there is an 82% probability for the event occurring at t=2.

For example, a bidirectional LSTM model may be used. Such model is particularly suitable for use with time series data and may be employed for providing a respective multivariate multi-label sequence classification. The model may employ a sigmoid activation function, but other activation functions may also be used. The architecture and training of respective bidirectional LSTM models is know in the art and will thus not be explained in greater detail here.

Figure 4 shows a first group 81 of first wind turbines 101 for which the base model may be generated using data sets collected from these first wind turbines 101. Training data collection and model training to obtain the base model may occur as described with respect to figures 1 and 2. The first wind turbines 101 may be selected to have a relatively large number of operational data available for respective downtime events and to form a sufficiently homogeneous group. The wind turbines may accordingly be selected based on the availability of operational data for plural downtime events and based on a similarity criterion. As explained above, one or more wind turbine features that have relevance for the downtime event to be predicted may be selected as the similarity criterion, for example wind turbine power rating (within similar range), blade length and/or wind turbine height (within similar range), type of electrical generator (e.g., same type), and/or other suitable criteria. The resulting base model may then provide good prediction results when applied to wind turbines of first group 81 or to similar wind turbines, for example to wind turbines that also meet the similarity criterion.

For a second group 82 of second wind turbines 102, insufficient operational data may be available to generate a model using machine learning, for example as only few wind turbines are in this group. The second wind turbines may be similar within the group (e.g., they may fulfill a corresponding similarity criterion using similar or the same wind turbine features), but they may be dissimilar to the wind turbines 101 of the first group 81. For example, the type of electrical generator of wind turbines 102 may be different from wind turbines 101, or the blade length and/or output power may lie within a different range. Optionally, a third group with third wind turbines 103 and further respective groups may be formed. Third wind turbines 103 may for example be of a new type so that sufficient operational data has not yet been accumulated for a machine learning process.

To form the groups, a dissimilarity measure may be used to quantitatively describe the dissimilarity between the wind turbines 101 and the wind turbines 102 (and optionally further wind turbines). Clustering may be performed by using this dissimilarity measure. Thereby the wind turbines may be clustered into groups 81, 82, 83, ... of fairly similar wind turbines. The similarity criterion may thus be based on a (quantitative) dissimilarity measure, which may be one of the above-mentioned wind turbine features.

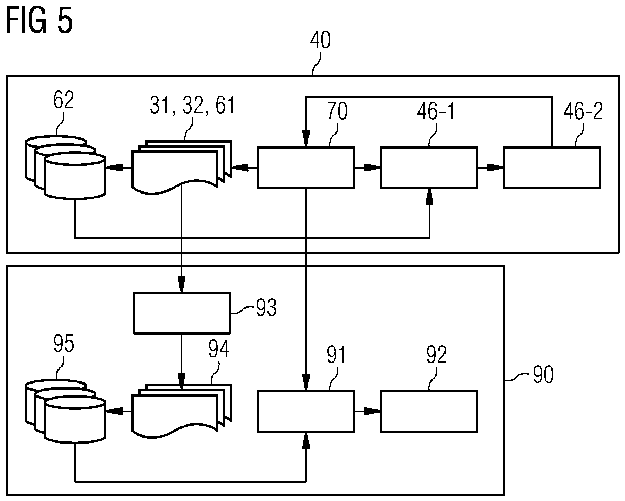

As there is insufficient operational data, it may not be possible to generate an accurate base model for the second group 82 and the third group 83. Figure 5 illustrates a method that may be performed for providing a model (sub-model) for such group of wind turbines. In method 40, the generation of the base-model 70 is again illustrated in a simplified form, which includes the use of the data sets from storage 62 to perform model training 46-1 and model validation 46-2 to obtain the base model 70. This is based on the configuration data objects 31, 32, 61, which may also be adapted based on the generated model (e.g., when hyperparameters are adapted during the model validation).

A transfer learning process 90 is employed for adjusting the base model 70 to make it applicable to the respective group 82 (or 83) of wind turbines. For the wind turbines of the respective group, training data is collected, which may occur as described with respect to figure 1 (with the difference that fewer data sets are collected). The data sets for the second group 82 of wind turbines 102 may be stored in a data set storage 95. Based on the configuration data objects, e.g. 31, 32, 61, a data equivalency analysis may determine in step 93 if there is an equivalency between the data sets from which the base model 70 was generated and the data sets collected in storage 95 for the second group 82. If this is the case, corresponding configuration data objects 94 may be generated for the second group of wind turbines and may be used to structure the collected data.

In step 91, the base model is re-trained using the processed second data sets from storage 95 that have been collected from the second wind turbines 102. Such retraining may occur by means of transfer learning. In transfer learning, some of the parameters (for example weights and/or biases) of the base model may be fixed (or frozen), and the remaining parameters may be allowed to adapt. Transfer learning may also involve the removal of a layer, e.g. one or more of the last layers which are often task-specific, which may help adaptation of the model. It may further involve adding one or more layers, which may also facilitate model adaptation. The training may otherwise occur as described above with respect to the training of the base model. It may also comprise a model validation in step 92, and may further comprise model testing.

By generating the sub-model using such transfer learning, an accurate model for predicting downtime events may be obtained for the wind turbines of second group 82 even though only little training data is available for the second wind turbines 102. Further, the solution employs data sets of many wind turbines to generate the base model and further employs data sets from plural second wind turbines to generate the sub-model, thus providing a many-to-many approach. This may further improve the model accuracy, as more data sets may be available for the transfer learning, and may further allow the application of the sub-model to wind turbines that are similar to the wind turbines 102, for example to wind turbines that fulfil the respective similarity criterion (please see above).

Similarly, a sub model may be generated for the third group 83 of third wind turbines 103, and for any further groups of wind turbines that fulfill a suitable similarity criterion, for example by clustering the wind turbines according to a quantitative measure of dissimilarity or any other means.

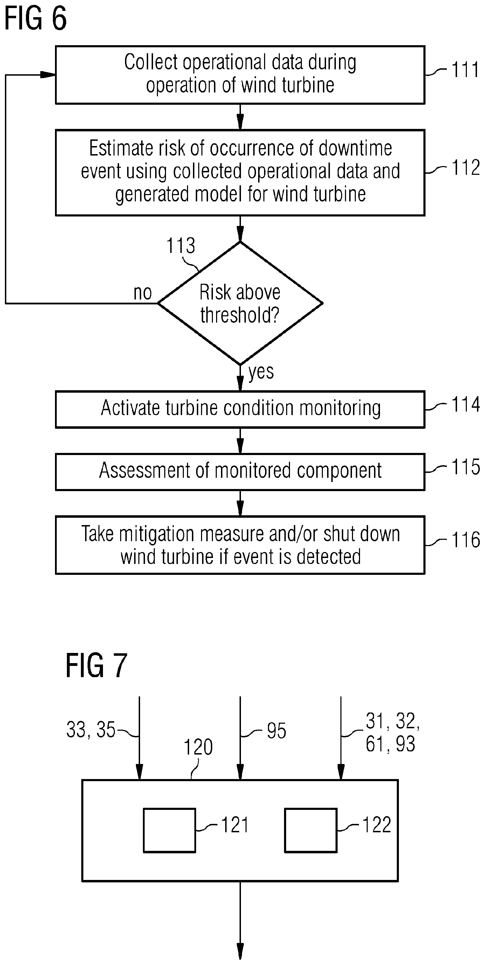

Figure 6 illustrates a method of applying a generated sub-model for predicting a downtime event. In step 111, operational data is collected of the wind turbine during operation of the wind turbine. This may include the operational data defined in the respective configuration data object 32 and may involve both wind turbine operating data and meteorological data. The data may be processed in accordance with the respective data configuration and may be provided as an input to the sub-model, which has been generated in accordance with the method of figure 5 for the wind turbines that are similar to the present wind turbine (the wind turbine may for example belong to the second group 82). In step 112, the risk of occurrence of the downtime event for which the model was trained is estimated by use of the generated model (i.e. the sub-model). In other words, inference is performed using the collected operational data as input to the model. In step 113, it is checked if the risk for the downtime event is above a threshold. If not, the method continues in step 111.

If the threshold is exceeded in step 113, one or more mitigation measures may be taken. For example, a wind turbine condition monitoring may be started in step 114 (with respect to the component involved in the predicted downtime event) and the state of the monitored component may be assessed in step 115. As an example, the sub-model may be trained for predicting wind turbine blade icing. The condition monitoring may capture pictures of the wind turbine's rotor blade in step 114, and these pictures may be assessed in step 115. Such assessment may occur automatically, for example using pattern recognition, which may also employ a neural network, in particular a trained artificial intelligence. If the analysis shows that the predicted downtime event is unlikely to occur, e.g. that there is no icing present on the blades, the method may again continue in step 111 (not shown in figure 6). If the assessment in step 116 indicates that the downtime event is likely to occur, a mitigation action may be taken in step 116, and/or the wind turbine may be shut down (e.g., to prevent damage). For example, if icing on the blades is detected, a de-icing solution may be started to de-ice the rotor blades, and/or other mitigation actions may be taken. After the blades have been de-iced successfully, the method may return to step 111. Other actions, such as notification of an operator, may certainly be taken.

Steps 111-113 may be performed continuously during operation of the wind turbine. Accordingly, mitigation actions may be taken prior to the occurrence of the event and prior to damaging the wind turbine. This may reduce maintenance costs and the downtime of the wind turbine, thus increasing energy production.

Figure 7 shows a processing system 120 having a processing unit 121 and a memory 122. Processing unit 121 may comprise any kind of processor, such as a microprocessor, an application-specific integrated circuit, a field-programmable gate array, a digital signal processor, or the like. Memory 122 may comprise any kind of memory, such as RAM, ROM, EEPROM, Flash Memory, a hard-disk drive and the like. Processing system 120 may be implemented as a computer; it may comprise further components common to a computer system, such as respective input/output interfaces, a data communication bus for interconnecting the different components, and a user interface. Memory 122 may store control instructions to be executed by processing unit 121. Such control instructions may be configured to cause the control system 121 to perform any of the methods described herein, including data collection, model generation and inference. Processing system 121 may be provided in a remote operating center that may receive wind turbine operating data and meteorological data from respective data sources 33, 35 from the first group 81, and that may further receive the respective data, i.e. the second data sets, from respective data sources from the second group 82, e.g. from the data set storage 95. It may further receive the configuration data objects 31, 32, 61, 93, and/or may store these in memory 122.

The processing system 120 may perform only one or a combination of data collection, training, and inference. The processing system may also be distributed across plural sites, it may for example comprise a section for data collection and training at a remote operation center and a section performing inference implemented in a wind turbine or a wind farm controller. Other implementations are also conceivable.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1.  A computer-implemented method of generating a model for predicting a downtime event of a wind turbine from operational data of the wind turbine, wherein the method comprises:

    selecting plural first wind turbines (101) for each of which one or more, preferably plural, first data sets comprising operational data of the wind turbine (101) associated with a downtime event of the wind turbine (101) are available;
    training a base model (70) with the first data sets of the selected plural first wind turbines (101) using machine learning, wherein for training with each first data set, the operational data of the respective data set serves as an input to the base model and the associated downtime event of the data set serves as a label;
    selecting plural second wind turbines (102) according to a predefined selection criterion, the selection criterion defining a minimum degree of similarity between the selected plural second wind turbines (102), wherein for each of the selected second wind turbines (102) at least one second data set comprising operational data of the wind turbine (102) associated with a downtime event of the wind turbine (102) is available, wherein a number of the selected second wind turbines (102) is smaller than a number of the selected first wind turbines (101) and/or wherein an average number of second data sets available for each second wind turbine (102) is smaller than an average number of first data sets available for each first wind turbine (101);
    applying transfer learning (90) to the base model (70) using the second data sets of the selected second wind turbines (102) to obtain a sub-model for the selected second wind turbines (102); and
    providing the sub-model for predicting a downtime event of a wind turbine based on current operational data of the wind turbine.

2.  The method according to claim 1, wherein the selection of the plural second wind turbines (102) according to the predefined selection criterion comprises:

    selecting one or more wind turbine features for evaluation of similarity; and
    selecting plural wind turbines for which the one or more selected wind turbine features fulfill a similarity criterion as the plural second wind turbines (102).

3.  The method according to claim 2, further comprising deriving at least one quantitative measure of dissimilarity between the first wind turbines (101) and a group of wind turbines from which the second wind turbines (102) are to be selected, the dissimilarity measure being selected as the wind turbine feature for evaluation of similarity; and using the derived dissimilarity measure as the similarity criterion for selecting the plural second wind turbines (102).

4. The method according to claim 2 or 3, wherein the selecting of the one or more wind turbine features comprises applying a feature learning algorithm that determines a correlation of wind turbine features with the downtime event and that selects one or more wind turbine features having a higher correlation than other features.

5. The method according to any of claims 2 to 4, wherein the one or more wind turbine features comprise one or a combination of:

a power rating of the wind turbine;
a blade length of the wind turbine;
a height of the wind turbine;
a type of site at which the wind turbine is erected, in particular onshore or offshore site;
a type of mechanical drive train of the wind turbine;
a type of electrical generator of the wind turbine;
a type of tower of the wind turbine; and
a type of operational data produced by the wind turbine.

6. The method according to any of the preceding claims, wherein each of the base model (70) and the sub-model is each an artificial neural network, preferably a long short-term memory, LSTM, deep neural network.

7. The method according to any of the preceding claims, wherein applying the transfer learning comprises freezing a subset of parameters of the baseline model (70) and training the model with the frozen parameters using the second data sets to obtain the sub-model.

8. The method according to any of the preceding claims, wherein the operational data of the first data sets and/or the second data sets comprises operational data collected before the occurrence of the associated downtime event and/or operational data collected after the occurrence of the associated downtime event.

9. The method according to any of the preceding claims, wherein the operational data of the first data sets and/or the second data sets comprises wind turbine operating data collected from a supervisory control and data acquisition, SCADA, system and/or from a condition monitoring system, CMS, of the respective wind turbine during operation of the wind turbine, and/or comprises meteorological data collected for the respective wind turbine during operation of the wind turbine.

10. The method according to claim 9, wherein the wind turbine operating data comprises one or a combination of:

a rotational speed of a wind turbine rotor;
a power output of the wind turbine;
temperature data of one or more wind turbine components obtained from a temperature sensor; and
vibration data of one or more wind turbine components obtained from a vibration sensor.

11. The method according to any of the preceding claims, wherein the sub model is configured to provide a probability of the occurrence of a downtime event within a predefine period of time and/or an estimate of a time period until an expected occurrence of a downtime event and/or a risk score for the occurrence of a downtime event.

12. A method of collecting training data for generating a model in accordance with any of the preceding claims, the training data comprising one or more data sets for a wind turbine (101, 102), each data set comprising operational data associated with a downtime event, wherein the method comprises:

defining parameters of the operational data of the data set, wherein the defined parameters comprise one or more operating parameters of the wind turbine (101, 102) and/or one or more meteorological parameters;
defining one or more downtime events for the data sets;
collecting plural data sets from plural wind turbines, each wind turbine having experienced one or more of the defined downtime events, wherein each data set comprises the operational data of the wind turbine (101, 102) collected for the defined parameters for the associated downtime event of the wind turbine;
processing the collected data sets to bring the collected data sets into a predefined format; and
providing the collected data sets for generation of the model by training the model with the collected data sets.

13. A method of predicting a downtime event of a wind turbine, wherein the method comprises:

obtaining a sub-model generated according to any of claims 1-12 for the wind turbine;
obtaining current operational data of the wind turbine; and
applying the sub-model to the obtained current operational data to obtain a prediction of a downtime event of the wind turbine.

14. A data processing system (120) comprising a processing unit (121) configured to perform the method of any of the preceding claims.

15. A computer program comprising control instructions which, when executed by a processing unit (121) of a data processing system (120), cause the processing unit (121) to perform the method of any one of claims 1 to 13.

FIG 1

FIG 2

EP 4 650 897 A1

FIG 3

FIG 4

# FIG 5

## FIG 6

Collect operational data during operation of wind turbine — 111

Estimate risk of occurrence of downtime event using collected operational data and generated model for wind turbine — 112

113
Risk above threshold?
no
yes

Activate turbine condition monitoring — 114

Assessment of monitored component — 115

Take mitigation measure and/or shut down wind turbine if event is detected — 116

## FIG 7

33, 35
120
95
31, 32, 61, 93

121
122

| | Europäisches Patentamt<br>European Patent Office<br>Office européen des brevets | **EUROPEAN SEARCH REPORT** | **Application Number**<br>EP 24 17 6233 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/102527 A1 (LIU XIN [HK] ET AL) 8 April 2021 (2021-04-08)<br>* paragraph [0060] - paragraph [0064]; figure 1 and 2 *<br>* paragraph [0067] - paragraph [0070] *<br>* paragraph [0075] - paragraph [0086] *<br>* paragraph [0105] - paragraph [0108] *<br>----- | 1-15 | INV.<br>G05B23/02<br>F03D17/00 |
| A | US 2023/106311 A1 (SEPE MARZIA [IT]) 6 April 2023 (2023-04-06)<br>* paragraph [0051] - paragraph [0054]; figure 1 and 2 *<br>----- | 1-15 | |
| A | US 2022/245014 A1 (GUPTA SHREYA [US] ET AL) 4 August 2022 (2022-08-04)<br>* paragraph [0005] *<br>* paragraph [0031] *<br>* paragraph [0036] *<br>* paragraph [0040] - paragraph [0044]; figure 1 *<br>* paragraph [0054] - paragraph [0056]; figure 1 *<br>----- | 1-15 | |
| | | | **TECHNICAL FIELDS SEARCHED (IPC)**<br>G05B<br>F03D |

The present search report has been drawn up for all claims

| Place of search | Date of completion of the search | Examiner |
|---|---|---|
| Munich | 17 October 2024 | Bernard, Eddy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6233

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | Publication date | Patent family member(s) | Publication date |
|---|---|---|---|
| US 2021102527 A1 | 08-04-2021 | NONE | |
| US 2023106311 A1 | 06-04-2023 | AU 2021230969 A1 | 29-09-2022 |
| | | BR 112022017663 A2 | 18-10-2022 |
| | | CA 3169765 A1 | 10-09-2021 |
| | | CN 115244482 A | 25-10-2022 |
| | | EP 4115252 A1 | 11-01-2023 |
| | | GB 2609104 A | 25-01-2023 |
| | | IT 202000004573 A1 | 04-09-2021 |
| | | JP 7477625 B2 | 01-05-2024 |
| | | JP 2023516134 A | 18-04-2023 |
| | | KR 20220149581 A | 08-11-2022 |
| | | US 2023106311 A1 | 06-04-2023 |
| | | WO 2021175493 A1 | 10-09-2021 |
| US 2022245014 A1 | 04-08-2022 | NONE | |

EPO FORM P0459

For more details about this annex : see Official Journal of the European Patent Office, No. 12/82